**Europäisches Patentamt**

**European Patent Office**

**Office européen des brevets**

(19)

(11) Veröffentlichungsnummer : **0 380 653 B1**

(12) ## EUROPÄISCHE PATENTSCHRIFT

(45) Veröffentlichungstag der Patentschrift :
**08.04.92 Patentblatt 92/15**

(51) Int. Cl.$^5$ : **G01M 9/00**

(21) Anmeldenummer : **89909383.5**

(22) Anmeldetag : **03.08.89**

(86) Internationale Anmeldenummer :
**PCT/DE89/00513**

(87) Internationale Veröffentlichungsnummer :
**WO 90/01688 22.02.90 Gazette 90/05**

(54) **WÄRMEBILDKAMERA MIT EINEM GEKÜHLTEN DETEKTORMOSAIK.**

(30) Priorität : **03.08.88 DE 3826379**

(43) Veröffentlichungstag der Anmeldung :
**08.08.90 Patentblatt 90/32**

(45) Bekanntmachung des Hinweises auf die
Patenterteilung :
**08.04.92 Patentblatt 92/15**

(84) Benannte Vertragsstaaten :
**FR GB IT NL SE**

(56) Entgegenhaltungen :
**EP-A- 0 035 587
US-A- 3 977 244
Cryogenics, Vol. 28, No. 1. January 1988, Butterworth & Co. (Publishers) Ltd. (Guildford, Surrey, GB); D.A. Dress et al: "Cryogenic wind tunnel research: a global perspective", pages 10-21**

(56) Entgegenhaltungen :
**ICIASF 87, Int. Congress on Instrumentation in Aerospace Simulation Facilities, 22-25 June 1987, Williamsburg, VA, D. Michele Heath et al: "Remote noncontacting measurements of heat transfer coefficients for detection of boundary layer transition in wind tunnel tests" pages 135-139
Spie, Vol. 397, 19-22 April 1983, (Genf, CH): A.-M. Bouchardy et al: "Processing of infrared thermal images for aerodynamic research, pages 304-309
Patent Abstracts of Japan, Band 12, Nr. 235 (P-725), 6. Juli 1988 & JP-A-63027766**

(73) Patentinhaber : **Deutsche Airbus GmbH
Kreetslag 10
W-2103 Hamburg 93 (DE)**

(72) Erfinder : **SCHULZE, Bernd
Angerweg 5
W-8028 Taufkirchen (DE)**
Erfinder : **CRAUBNER, Siegfried
Narzissenweg 56
W-8031 Wessling (DE)**
Erfinder : **LANGE, Günter Dr.
Am Feldl 21
W-8011 Egmating (DE)**

## Beschreibung

Die Erfindung bezieht sich auf eine Wärmebildkamera mit einem gekühlten Detektormosaik und einem optischen System.

Eine solche Wärmebildkamera ist durch die EP 0 035 587 A1 bekannt. Die dort beschriebene Wärmebildkamera weist ein Detektorfeld mit im infraroten Spektralbereich empfindlichen Detektoren auf. Die Kamera nimmt Temperaturverteilungen auf und wandelt sie in elektrische Signale um. Weiterhin wird die Temperaturverteilung mit Hilfe einer Auswerteeinrichtung bildlich und graphisch dargestellt.

Ein Verfahren zum Erfassen von an Windkanalmodellen auftretenden konvektiven Zuständen in Strömungsgrenzschichten ist aus der DE-OS 29 01 625 bekannt. Dort ist auch die Analogie von Wärme- und Impulsübertragung zum Erfassen von an Windkanalmodellen auftretenden konvektiven Zuständen in Strömungsgrenzschichten zur Bestimmung von Temperaturverteilungen bekannt.

Aus der US-A- 3 977 244 ist die Anwendung von Wärmebildkameras in Windkanälen bekannt.

Der Erfindung liegt die Aufgabe zugrunde, die Wärmebildkamera nach dem Oberbegriff des Anspruches 1 so weiterzubilden, daß sie zur Aufnahme von Strömungsbildern in einem Kryowindkanal geeignet ist.

Diese Aufgabe wird durch im Anspruch 1 gekennzeichneten Merkmale gelöst. Vorteilhafte Ausgestaltungen der Erfindung sind in den abhängigen Ansprüchen gekennzeichnet.

Der wesentliche Vorteil bei der Anwendung der Erfindung besteht darin, daß die Erfassung der Zustände von Strömungsgrenzschichten auf Windkanalmodellen von außen mit Hilfe der erfindungsgemäßen Wärmebildkamera erfolgt, insbesondere bei tiefen Temperaturen. Dadurch kann die Strömumgsgrenzschicht in einem Temperaturbereich von 80 bis 350 Kelvin mit hoher Temperaturauflösung von 0,1 Kelvin, einer räumlichen Auflösung bis zu 2 mrad und einer zeitlichen Auflösung von etwa 0,5 Millionen Bildelemente pro set. erfaßt werden. Für die Anwendung im kryogenen Windkanal werden im langwelligen, infraroten Spektralbereich von etwa 10 bis 30 μm empfindliche Siliziumdetektoren, z.B. dotierte Siliziumdetektoren, die als extrinsische Fotoleiter betrieben werden, verwendet, und die auf die Temperatur des flüssigen Heliums gekühlt sind. Die Abtastung der Meßszene erfolgt zweckmäßig nach dem sogenannten "Schritt- und Starren-Verfahren", wobei über ein individuell programmiertes Abtastmuster mit Abtasteinheiten die Konturen des Windkanalmodells erfaßt werden.

Mit Hilfe der erfindungsgemäßen Vorrichtung können im kryogenen Windkanal bei Flug-Reynolds-Zahlen Schubspannungsfelder infolge Konvektion auf der Oberfläche des Modells, laminare-turbulente Ubergänge in der Grenzschichtströmung, abgelöste Strömungsbereiche sowie das dynamische Verhalten in der Strömungsgrenzschicht ermittelt und dargestellt werden. Es lassen sich mit der Erfindung große Einsparungen beim Betrieb von kryogenen Windkanälen und erhebliche Leistungsverbesserungen über die Laminarisierung bei Fluggeräten und damit größere Wirtschaftlichkeit derselben erzielen.

Die Erfindung wird nachstehend anhand von in der Zeichnung schematisch dargestellten Ausführungsbeispielen näher erläutert. Es zeigen

Fig. 1 einen Windkanal mit einer Vorrichtung zum Erfassen von Zuständen von Strömungsgrenzschichten an einem Modell;

Fig. 2 eine Kamera für die Vorrichtung nach Fig. 1;

Fig. 3 ein Detektormosaik für die Kamera nach Fig. 2;

Fig. 4 eine Draufsicht auf ein anderes Windkanalhalbmodell mit einer Aufteilung von Abtasteinheiten und

Fig. 5 ein Blockdiagramm für die Vorrichtung nach Fig. 1 einschließlich einer Auswerteeinrichtung.

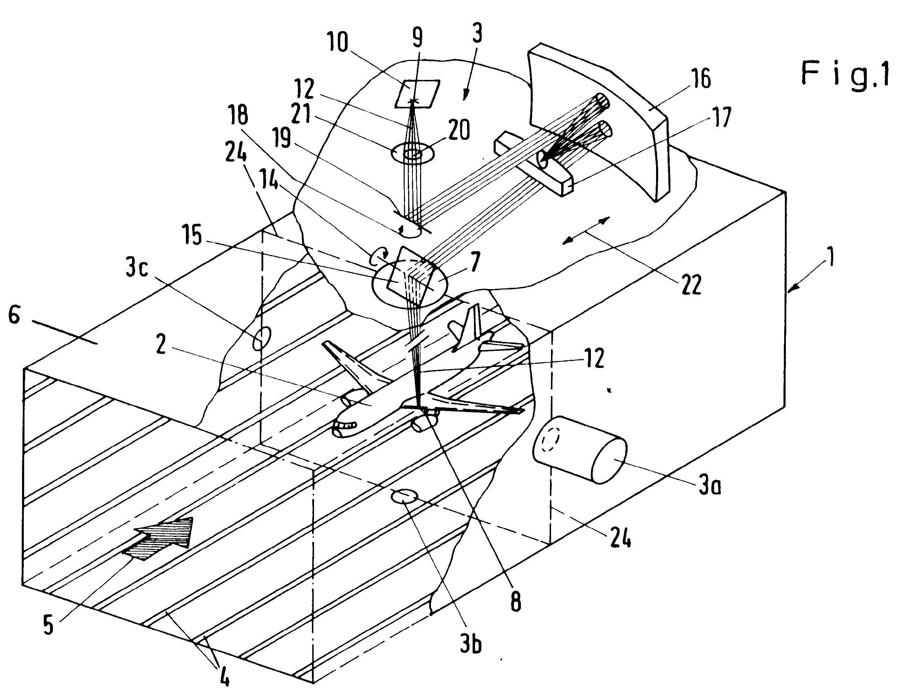

In der schematisthen Fig. 1 ist in einem kryogenen Windkanal 1 mit einem geschlossenen Kreislauf ein Flugzeugmodell 2 aufgehängt, an dem mit einer Kamera 3 die beim Betrieb des Windkanals 1 an dem Flugzeugmodell 2 auftretenden Zustände von Strömungsgrenzschichten erfaßt werden. Der hier dargestellte Windkanal 1 weist aus strömungstechnischen Gründen Schlitze 4 in den Wänden auf. Durch einen Pfeil 5 ist die Richtung des Strömungsmediums wiedergegeben. Als Strömungsmedium wird Stickstoff verwendet, welches Versuchsbedingungen von 80 bis 350 Kelvin gestattet. Die Kamera 3 ist oberhalb der Decke 6 des Windkanals 1 angebracht, sie blickt mit einem Fenster 7 auf das Modell 2. Beim Anströmen des Modells 2 durch das Strömungsmedium entstehen geringe Temperaturunterschiede an der Oberfläche des Modells 2, die durch die Kamera 3 mit im langwelligen infraroten Spektralbereich von etwa 10 bis 30 μm empfindlichen Detektoren aufgenommen werden.

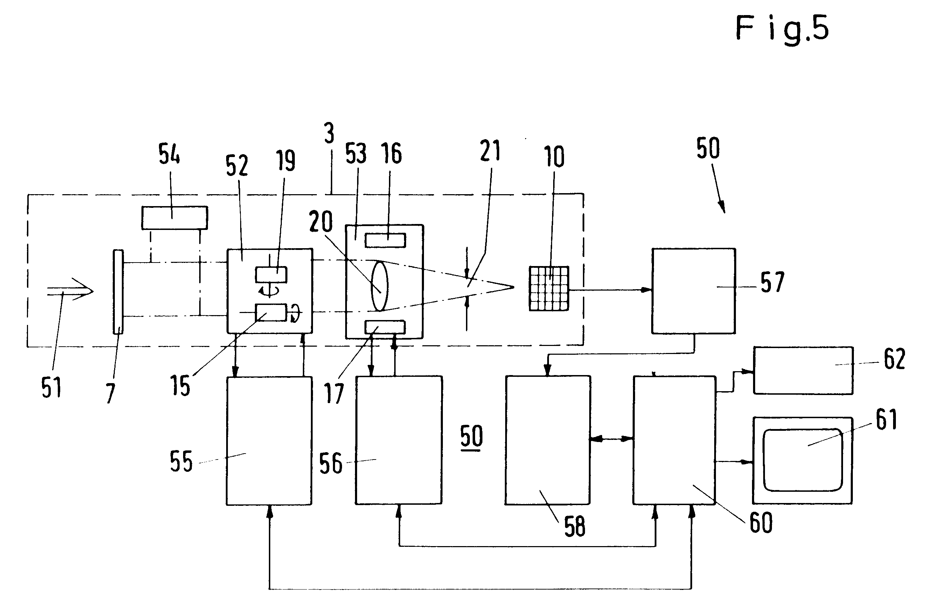

In Fig. 1 ist der Strahlengang der infraroten Strahlung von einem Punkt 8 an der Tragflächenvorderkante des Modells 2 bis zu einem Detektor 9 eines Detektormosaiks 10 dargestellt. Ein punktueller Strahl 12 im Infrarotwellenbereich tritt durch das für infrarote Wellen durchlässige Fenster 7 in die Kamera 3 ein und wird durch einen in Pfeilrichtung 14 schwenkbaren Spiegel 15 auf einen sphärischen Spiegel 16 gelenkt, von dort werden die Strahlen gebündelt und von einem zweiten sphärischen Spiegel 17 wieder auf den ersten sphärischen Spiegel 16 geworfen, von diesem über einen in Pfeilrichtung 18 schwenkbaren Spiegel 19 und über eine Linse 20 mit Streulichtblende 21 auf den Detektor 9 gelenkt, in dem die Infrarotwellen vom Punkt 8 in elektrische Signale umgewandelt werden. Der sphärische fokussierende Spiegel 17 kann zur Scharfeinstellung in Richtung der Pfeile 22 verschoben werden. Zur Erfassung aller Grenzschichtbereiche des Modells 2 sind weitere Kameras 3a, 3b und 3c angedeutet, die zusammen mit der Kamera 3 in einer Meßebene 24 angeordnet sind. Eine Auswerteeinrichtung für die im Detektormosaik erfaßten Bildelemente zur optischen und graphischen Darstellung der Strömungsgrenzschichten ist weiter unten anhand der Fig. 5 erläutert.

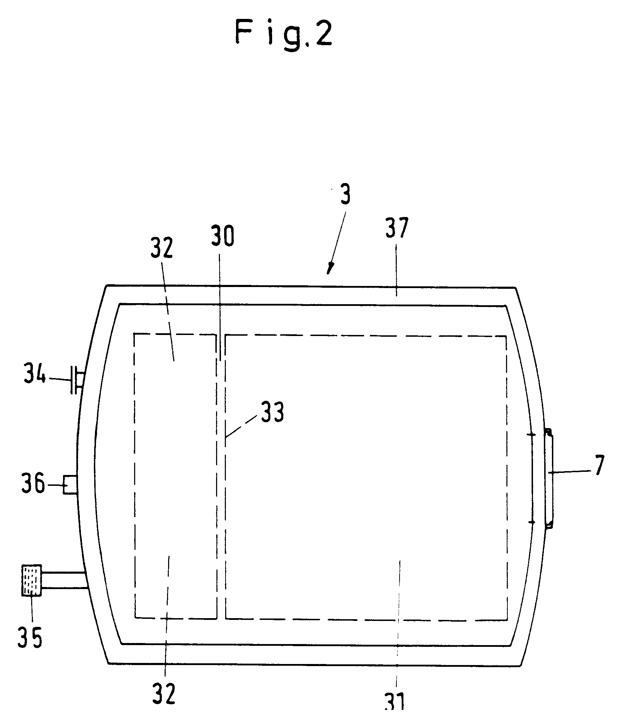

Die Fig. 2 zeigt den groben Aufbau der Kamera 3, in derem Inneren ein schmaler Raum 30 für das Detektormosaik 10 zwei Räume 31 und 32 voneinander trennt. In dem Raum 31 sind alle anhand der Fig. 1 beschriebenen Teile des optischen Systems in einer Stickstoff-Atmosphäre angeordnet. Hierdurch ist es möglich, die Temperatur in dem Raum 31 der Windkanaltemperatur anzugleichen, wodurch ein hohes Maß an mechanischer Genauigkeit gewährleistet ist. Die Kühlung der Kamera 3 erfolgt durch flüssiges Helium, wozu der Raum 32 als Helium-Reservoir dient. Der schmale Mittelraum 30 für das Detektormosaik wird evakuiert und durch den benachbarten Raum 32 auf eine Temperatur von etwa 10 K abgekühlt. Auf der rechten Seite ist das infrarotdurchlässige Fenster 7 angeordnet. Auf der gegenüberliegenden Seite sind ein Anschluß 34 zum Evakuieren des Detektorraumes 30, ein Füllstutzen 35 zum Einfüllen des Heliums sowie ein Kabelanschluß 36 für den Betrieb und die Steuerung der Kamera vorgesehen. Die Kamera ist von einem Isoliermantel 37 umschlossen.

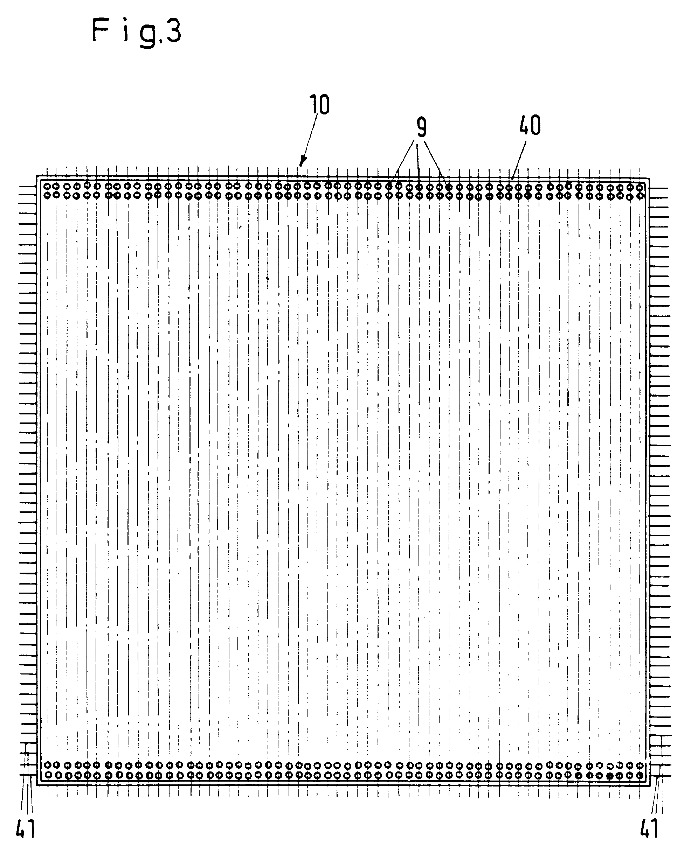

Fig. 3 stellt schematisch das in der Kamera 3 zur Anwendung gelangende Detektormosaik 10 dar. In eine Platine 40 sind 60 x 60 einzelne Detektoren 9 eingesetzt. Davon sind in der Fig. 3 nur die beiden oberen und unteren Reihen mit je 60 Detektoren dargestellt. Dazwischen sind in gleicher Anordnung weitere 56 Reihen von Detektoren vorhanden. Aus jeder Detektorreihe führen elektrische Leitungen 41 heraus. In der Praxis wird eine entsprechende Größe für das kleinste Bildelement (Pixel) von ca. 2 mm x 2 mm angestrebt. Wenn das Detektormosaik 10 einen Abstand von 1 m zum Modell 2 hat, ist eine räumliche Auflösung von 2 mrad möglich. Diese große Auflösung gestattet eine mit anderen Mitteln nicht zu erfassende genaue Darstellung der Zustände von Strömungsgrenzschichten. Mit den Detektoren aus dotiertem Silizium ist eine Temperaturauflösung von ca. 0,1 K zu erzielen. Es ist technisch durchaus möglich, Detektormosaiken mit einer anderen Anzahl von Detektoren zu verwenden, wodurch eine noch größere zeitliche Auflösung gegeben ist.

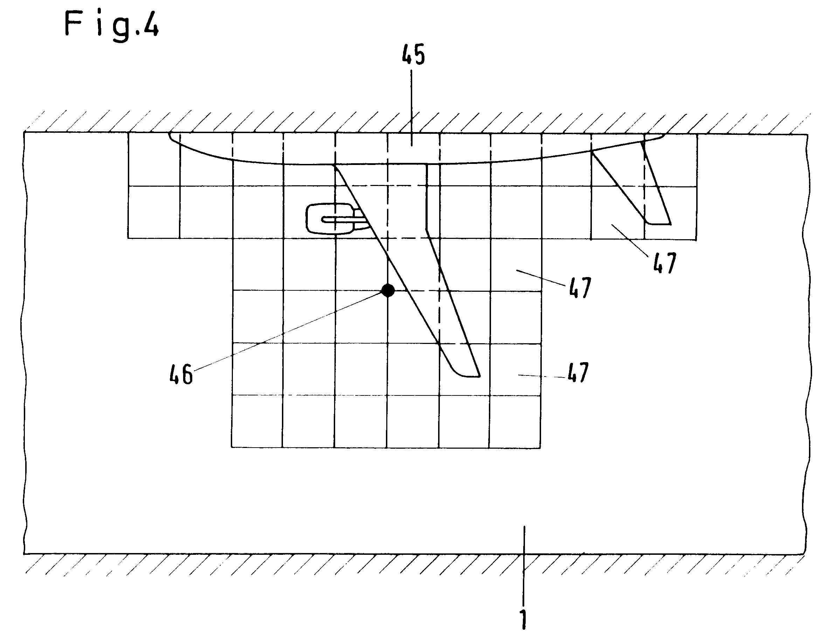

Die Fig. 4 zeigt einen Halbschnitt ducth den Windkanal 1 mit der Draufsicht auf ein Halbmodell 45. Das Sichtfenster 7 der hier nicht dargestellten Kamera 3 soll über einem Punkt 46 angeordnet sein. Zur rationellen Darstellung der Strömungsgrenzschichten sind auf und um das Halbmodell 45 herum quadratische Abtasteinheiten 47 vorgesehen, die eine solche Größe haben, daß sie jeweils auf einmal auf dem Detektormosaik 10 abzubilden sind. Somit wird bei einer Einstellung der Kamera 3 entsprechend Fig. 1 jede Abtasteinheit 47 von allen Detektoren 9 gleichzeitig abgetastet und durch Weitergabe in die Auswerteeinrichtung gespeichert. Nach Abtastung des Gesamtbildes ist, wie weiter unten anhand der Fig. 5 erläutert wird, die Darstellung eines kalibrierten Wärmebildes möglich, wobei die Temperaturprofile den Zustand der Strömungsgrenzschichten entsprechend den auf der Oberfläche und der Umgebung des Modells 45 herrschenden Temperaturen kennzeichnen.

In der Fig. 5 ist ein Blockdiagramm für die gesamte Vorrichtung dargestellt, wobei der gestrichelt umrandete Teil die Einzelteile für die Kamera 3 umfaßt und die anderen Blöcke eine Auswerteeinrichtung 50 symbolisieren. Im Bereich der Kamera 3 sind die vom Modell 2 einfallenden Infrarotsrahlen durch einen Pfeil 51 und innerhalb durch strichpunktierte Linien dargestellt. Die Infrarotstrahlen treten durch das Fenster 7 in die Kamera ein, durchlaufen die Abtastvorrichtung 52 mit den schwenkbaren Umlenkspiegeln 15 und 19, durchlaufen die Optik 53 mit der Linse 20 und den beiden sphärischen Spiegeln 16 und 17, durchtreten die Streulichtblende 21 und werden auf dem Detektormosaik 10 fokussiert. Eine bisher in Fig. 1 innerhalb der Kamera 3 noch nicht dargestellte Kalibrationsquelle 54 dient zum Abgleich der unterschiedlichen Detektorempfindlichkeiten bei jeden neuen Meßvorgang. In der außerhalb der Kamera 3 installierten Auswerteeinrichtung 50 ist ein Abtastüberwacher 55, eine Überwachungs- und Steuerungseinrichtung 56 für den beweglichen fokussierenden sphärischen Spiegel 17 und für die Streulichtblende, ein Verstärker 57 für die elektrischen Detektorsignale, eine Ausleseelektronik für die Abtastung 58, ein Rechner 60, ein Farbbildmonitor 61 und ein Plotter 62 vorhanden. Die einzelnen Teile der Auswerteeinrichtung 50 sind in bekannter Weise durch elektrische Leitungen miteinander verbunden. Aus dem Verlauf dieser Leitungen und der Anordnung von Pfeilen ist ersichtlich, daß im Rechner 60 alle Teile der Auswerteeinrichtung gesteuert werden, die Signalspeicherung aus den Detektoren erfolgt und auch die Digitalanalog-Umwandlung für den Fabbildmonitor 61 und den Plotter 62 erfolgt.

Auf dem Farbbildmonitor 61 erfolgt somit durch Speicherung der aus den einzelnen Abtasteinheiten 47 (siehe Fig. 4) erfaßten Bildelemente eine rückwirkungsfreie Darstellung der Strömungsgrenzschichten auf dem Modell 2 bzw. 45. Im einzelnen erfolgt z.B. die Darstellung des laminar-turbulenten Überganges in der Grenzschichtströmung, von abgelösten Grenzschichtbereichen, der Kopplung von instationären Bewegungen und anderem sonst schwer darstellbaren dynamischen Verhalten der Strömungsgrenzschicht.

**Patentansprüche**

1. Wärmebuldkamera (3) mit einem gekühlten Detektormosaik (10) und einem optischen System dadurch gekennzeichnet, daß zum Erfassen von konvektiven Zuständen an der Oberfläche von Windkanalmodellen (2, 45) bei der Temperatur des flüssigen Stickstoffes die Detektoren (9) im langwelligen Infrarot im Spektralbereich von etwa 10-30 μm empfindlich und in einem Hochvakuum mit flüssigem Helium gekühlt sind, daß das optische System mit flüssigem Stickstoff gekühlt und auf die Oberfläche des Modells automatisch scharf einstellbar ist und daß ein Rechner (60) zur Umrechnung des Temperaturbildes in ein Strömungsbild angeschlossen ist.

2. Wärmebildkamera nach Anspruch 1, dadurch gekennzeichnet, daß das optische System aus einem Linsensystem (20) mit Streulichtblende (21), einem zweiachsigen optischen Abtastmechanismus und einer dynamischen Fokussiereinrichtung sowie einem für infrarote Strahlung durchlässigen Fenster (7) besteht.

3. Wärmebildkamera nach Anspruch 2, dadurch gekennzeichnet, daß der optische Abtasmechanismus aus einem um eine vertikale Hochachse schwingenden Umlenkspiegel (19) und einem un eine horizontale Achse schwingenden Umlenkspiegel (15) besteht und die dynamische Fokussiereinrichtung aus einer Doppel-Speilgelanordnung mit einem festen sphärischen Speigel (16) und einem beweglichen fokussierenden sphärischen Spiegel (17) besteht.

4. Wärmebildkamera nach einem oder mehreren der Ansprüche 1 bis 3, dadurch gekennzeichnet, daß sie so ausgebildet ist, daß das Abtasten des Modells (2, 45) schrittweise nach dem Schritt- und Starrenverfahren erfolgt, wobei nach jedem Schritt des vorzugsweise quadratische Detektormosaik (10) eine von zu messenden und auf das Detektormosaik abzubildenden Abtasteinheiten (47) abtastet und die emittierte Infrarotstrahlung erfaßt.

5. Wärmebildkamera nach einem oder mehreren der Ansprüche 1 bis 3, dadurch gekennzeichnet, daß sie so ausgebildet ist, daß das Abtasten des Modells (2, 45) durch eine kontinuierliche Abtastbewegung erfolgt, wobei das Detektormosaik (10), auf das eine von abzutastenden Abtasteinheiten (47) abzubilden ist, mit einer kontinuierlichen Bewegung über das Bildfeld geführt ist und die Detektorsignale kontinuierlich ausliest.

6. Wärmebildkamera nach einem oder mehreren der Ansprüche 1 bis 5, dadurch gekennzeichnet, daß die Auswerteeinrichtung (50) aus einem Abtastüberwacher (55) für die Umlenkspiegel (15, 19), einem Gerät (56) für die überwachung und Steuerung der Streulichtblende (21) und des beweglichen fokussierenden sphärischen Spiegels (17), einem Verstärker (57) für die Signale der Detektoren (9), einer Ausleseelektronik für die Abtastung (58), dem alle Geräte steuernden Rechner (60), einem Farbbildmonitor (61) für das Strömungsbild und einem Plotter (62)besteht.

**Claims**

1. A thermal imaging camera (3) with a cooled detector mosaic (10) and an optical system, **characterised in that** in order to detect convective conditions at the surface of wind tunnel models (2, 45) at the temperature of liquid nitrogen, the detectors (9) are sensitive in the long-wave infrared in the spectral range of about 10-30 um and are cooled with liquid helium in a high vacuum, that the optical system is cooled with liquid nitrogen and is settable finely and automatically on to surface of the model and that a computer (60) is connected so as to recalculate the temperature image into a flow pattern.

2. A thermal imaging camera according to claim 1, **characterised in that** the optical system consists of a lens system (20) with a scattered light stop (21), a two-axis optical scanning mechanism and a dynamic focusing device and a window (7) permeable to infrared radiation.

3. A thermal imaging camera according to claim 2, **characterised in that** the optical scanning mechanism consists of a deflecting mirror (19) swinging about a vertical axis and a deflecting mirror (15) swinging about a horizontal axis and the dynamic focusing device consists of a double mirror arrangement having a fixed spherical mirror (16) and a movable focusing spherical mirror (17).

4. A thermal imaging camera according to one or more of claims 1 to 3, **characterised in that** it is so constructed that scanning the model (2,45) takes place in steps according to the step/stop method, in which after each step the preferably square detector mosaic (10) scans one of the scanning units (47) which are to be measured and depicted on the detector mosaic and detects the emitted infrared radiation.

5. A thermal imaging camera according to one or more of claims 1 to 3, **characterised in that** it is so constructed that scanning the model (2, 45) takes place through a continuous scanning movement, in which the detector mosaic (10), on to which one of the scanning units (47) to be scanned is to be depicted, is guided with a continuous movement over the area of the image and reads out the detector signals continuously.

6. A thermal imaging camera according to one or more of claims 1 to 5, **characterised in that** the evaluation device (50) consists of a scanning monitor (55) for the deflecting mirror (16, 19), of a device (56) for monitoring and controlling the scattered light stop (21) and the movable focusing spherical mirror (17), of an amplifier (57) for the signals of the detectors (9), of an electronic read out unit for scanning (58), of the computer (60) which controls all devices, of a colour image monitor (61) for the flow pattern and of a plotter (62).

## Revendications

1. Caméra à image par rayonnement thermique avec mosaïque de détecteurs refroidie et un système optique, caractérisée en ce que pour la saisie d'états dégageant de la chaleur par convection, sur la surface de modèles de soufflerie (2, 45) à la température de l'azote liquide les détecteurs (9) sont sensibles aux infrarouges à grandes ondes dans la zone du spectre d'environ 10 à 30 microns et sont refroidis sous vide poussé avec de l'hélium liquide, en ce que le système optique est refroidi à l'azote liquide, et est automatiquement réglable avec acuité sur la surface du modèle et en ce qu'on associe un calculateur (60) pour convertir l'image de la température en une image d'écoulement.

2. Caméra à image par rayonnement thermique selon la revendication 1, caractérisée en ce que le système optique consiste en un système de lentilles (20) avec un écran (2) pour la lumière diffusée, un mécanisme d'exploration optique à deux axes et un dispositif dynamique de mise au point ainsi qu'une fenêtre laissant passer les rayons infrarouges.

3. Caméra à image par rayonnement thermique selon la revendication 2, caractérisée en ce que le mécanisme d'exploration optique consiste en un miroir de déviation (19) oscillant autour d'un axe vertical et un miroir de déviation (15) oscillant autour d'un axe horizontal et le dispositif de mise au point dynamique consiste en une disposition à double miroir avec un miroir sphérique fixe (16) et un miroir sphérique mobile de mise au point (17).

4. Caméra à image par rayonnement thermique selon l'une ou plusieurs des revendications 1 à 3, caractérisée en ce qu'elle est conçue de telle façon que l'exploration du modèle (2, 45) a lieu pas à pas selon le procédé marche/arrêt, dans lequel après chaque pas la mosaïque de détecteurs (10) de préférence quadratique explore l'une des unités d'exploration (47) à mesurer et à représenter sur la mosaïque de détecteurs et capte le rayonnement infrarouge émis.

5. Caméra à image par rayonnement thermique selon l'une ou plusieurs des revendications 1 à 3, caractérisée en ce qu'elle est constituée de telle façon que l'exploration du modèle (2, 45) est réalisée au moyen d'un mouvement continu d'exploration, dans lequel la mosaïque de détecteurs (10) qui est à représenter sur l'une des unités d'exploration (47) en cours d'exploration, est guidée sur la champ de prises de vue selon un mouvement continu et trie les signaux des détecteurs de façon continue.

6. Caméra à image par rayonnement thermique selon l'une des revendications 1 à 5, caractérisée en ce que le dispositif d'exploitation (50) consiste en un contrôleur d'exploration (55) pour les miroirs de déviation (15, 19), un appareil (56) pour surveiller et commander l'écran (21) de lumière diffusée et le miroir sphérique de mise au point mobile (17), un amplificateur (57) pour les signaux des détecteurs (9), une électronique de triage pour l'exploration (58), le calculateur (60) commandant tous les appareils, un moniteur d'image par rayonnement thermique (61) pour l'image de l'écoulement et un traceur de courbes (62).

Fig.1

# Fig.2

# Fig.3

Fig.4

EP 0 380 653 B1

Fig.5